# EUROPÄISCHE PATENTANMELDUNG

(11) **EP 2 876 783 A1**
(43) Veröffentlichungstag der Anmeldung: **27.05.2015**
(21) Anmeldenummer: 13194270.8
(22) Anmeldetag: 25.11.2013
(51) Int. Cl.: H02K 1/24, H02K 1/30, H02K 1/32

(54) **Schenkelpolläufer**

(71) Anmelder: Siemens Aktiengesellschaft, 80333 München (DE)
(72) Erfinder: Krompasky, Erik, 13583 Berlin-Spandau (DE)

(57) **Zusammenfassung**

Schenkelpolläufer aufweisend zumindest zwei nach radial außen weisende Polschafte (1), jeweils eine den jeweiligen Polschaft (1) umgebende elektrische Wicklung (2) und jeweils einen Polschuh (3), wobei der jeweilige Polschuh (3) radial außen am jeweiligen Polschaft (1) ist. Weiterhin betrifft die Erfindung eine elektrische Maschine mit einem derartigen Schenkelpolläufer. Um einen Schenkelpolläufer bereitzustellen, der leichter herzustellen und zu warten ist, wird vorgeschlagen, dass der jeweilige Polschuh (3) in Umfangsrichtung breiter als der jeweilige Polschaft (1) ist und radial außen an der jeweiligen Wicklung (2) angeordnet ist, wobei der jeweilige Polschuh (3) einen nach radial innen weisenden, sich verjüngenden Steg (4) aufweist, wobei der jeweilige Polschaft (1) an seiner radialen Außenfläche eine sich nach radial innen verjüngende und zum jeweiligen Steg (4) passende Nut (5) aufweist, wobei der jeweilige Polschuh (3) und der jeweilige Polschaft (1) mechanisch lösbar verbunden sind.

## Beschreibung

Die Erfindung betrifft einen Schenkelpolläufer aufweisend zumindest zwei nach radial außen weisende Polschafte, jeweils eine den jeweiligen Polschaft umgebende elektrische Wicklung und jeweils einen Polschuh, wobei der jeweilige Polschuh radial außen am jeweiligen Polschaft ist. Weiterhin betrifft die Erfindung eine elektrische Maschine mit einem derartigen Schenkelpolläufer.

Eine derartige elektrische Maschine ist beispielsweise aus dem deutschen Gebrauchsmuster DE 90 03 390 U1 bekannt.

Der Erfindung liegt die Aufgabe zugrunde, einen Schenkelpolläufer bereitzustellen, der leichter herzustellen und zu warten ist.

Diese Aufgabe wird durch ein einen Schenkelpolläufer der eingangs genannten Art dadurch gelöst, dass der jeweilige Polschuh in Umfangsrichtung breiter als der jeweilige Polschaft ist und radial außen an der jeweiligen Wicklung angeordnet ist, wobei der jeweilige Polschuh einen nach radial innen weisenden, sich verjüngenden Steg aufweist, wobei der jeweilige Polschaft an seiner radialen Außenfläche eine sich nach radial innen verjüngende und zum jeweiligen Steg passende Nut aufweist, wobei der jeweilige Polschuh und der jeweilige Polschaft mechanisch lösbar verbunden sind.

Weiterhin wird diese Aufgabe durch eine elektrische Maschine der eingangs genannten Art dadurch gelöst, dass die elektrische Maschine einen erfindungsgemäßen Schenkelpolläufer aufweist.

Die mechanisch lösbare Verbindung des jeweiligen Polschuhs mit dem jeweiligen Polschaft ermöglicht, dass der jeweilige Polschaft zunächst mit der jeweiligen Wicklung versehen werden kann. Die jeweilige Wicklung kann beispielsweise zuvor gewickelt und gegebenenfalls imprägniert bzw. getränkt werden oder aus flachen Kupferstäben hergestellt werden, welche zusammengelötet werden. Für eine besonders einfache Montage der Wicklung weist der jeweilige Polschaft von radial innen nach radial außen vorzugsweise eine konstante Breite in Umfangsrichtung auf. Insgesamt können somit vergleichsweise einfache Wicklungsmaschinen zum Bewickeln des jeweiligen Polschafts eingesetzt werden, was die Herstellung des Schenkelpolläufers des beträchtlich vereinfacht. Dabei gibt es prinzipiell weniger starke Beschränkungen in Bezug auf Gewicht oder Durchmesser, so dass die derart ausgebildeten Wicklungen bzw. Pole vergleichsweise leicht hergestellt bzw. gewickelt werden können.

Insbesondere nachdem der jeweilige Polschaft mit der zugehörigen Wicklung versehen wurde, wird der jeweilige Polschuh auf den Polschaft aufgebracht und mit diesem mechanisch lösbar verbunden. Da der jeweilige Polschuh in Umfangsrichtung breiter als der zugehörige Polschaft ist, kann der jeweilige Polschuh während des Betriebes auftretende Fliehkräfte der jeweiligen Wicklung aufnehmen und über die mechanisch lösbare Verbindung weitergeben. Vorzugsweise ist der jeweilige Polschuh in Umfangsrichtung zumindest so breit wie die jeweilige Wicklung.

Sollte eine Wartung oder Reparatur insbesondere der Wicklung erforderlich sein, kann die mechanisch lösbare Verbindung wieder gelöst werden und der jeweilige Polschuh abgenommen werden, um die Wicklung zu reparieren oder auszutauschen. Anschließend kann die Wicklung wieder eingesetzt und der jeweilige Polschuh wieder mechanisch lösbar mit dem jeweiligen Polschaft verbunden werden, was die Wartung des Schenkelpolläufers stark vereinfacht.

Der jeweilige, sich verjüngenden Steg und die jeweilige dazu passende Nut verhindern dabei unerwünschte Bewegungen des Polschuhs in Bezug auf den Polschaft. Dadurch wird insbesondere eine zuverlässige Fixierung und Positionierung des jeweiligen Polschuhs auf dem jeweiligen Polschaft ermöglicht, so dass die Montage des jeweiligen Polschuhs dadurch sowohl zuverlässiger als auch einfacher wird.

Bei einer vorteilhaften Ausgestaltung der Erfindung ist im jeweiligen Polschuh zumindest ein Kurzschlussstab angeordnet. Dabei ist der zumindest eine Kurzschlussstab als Teil eines Kurzschlusskäfigs ausgeführt, wozu die Kurzschlussstäbe jeweils am axialen Ende über Kurzschlussringe miteinander verbunden und kurzgeschlossen werden. Durch den Kurzschlusskäfig wird ein asynchroner Hochlauf der elektrischen Maschine ermöglicht. Der jeweilige Kurzschlussstab ist dabei vorteilhafterweise in einer im Wesentlichen in axialer Richtung verlaufenden Nut im jeweiligen Polschuh angeordnet, wobei die Nut an der radialen Außenseite des jeweiligen Polschuhs angeordnet ist und beispielsweise offen oder geschlossen ausgeführt ist.

Bei einer weiteren vorteilhaften Ausgestaltung der Erfindung ist der jeweilige Polschuh geblecht ausgeführt, wobei jeweils eine elektrisch isolierende Schicht zwischen den Blechen des jeweiligen Polschuhs angeordnet ist.

Der jeweilige Polschuh ist geblecht ausgeführt, wobei die Bleche in axialer Richtung gestapelt sind. Dabei ist der jeweilige Polschuh ein Bereich des Schenkelpolläufers, in welchem während des Betriebs eine besonders hohe Magnetfelddichte auftritt, so dass der Polschuh für die Verluste bzw. die Effizienz der elektrischen Maschine eine wichtige Rolle spielt. Die Blechung des jeweiligen Polschuhs erlaubt, die Verluste des Schenkelpolläufers zu verringern und ermöglicht, einen kleineren Luftspalt zu einem den Läufer umgebenden Stator vorzusehen. Zusätzlich lässt sich dadurch die für die Erregerwicklung erforderliche Kupfermenge verringern, was schließlich auch dazu verwendet werden kann, größere und leistungsstärkere elektrische Maschinen zu realisieren. Dadurch, dass die Bleche des jeweiligen Polschuhs durch eine jeweilige elektrisch isolierende Schicht voneinander isoliert sind, werden während des Betriebs induzierte Wirbelströme vermieden bzw. verringert, was sich vorteilhaft auf die magnetischen Eigenschaften des Schenkelpolläufers und auf die Effizienz der elektrischen Maschine auswirkt.

Bei einer weiteren vorteilhaften Ausgestaltung der Erfindung weist der Schenkelpolläufer einen Radkranz mit zumindest zwei Radkranzsegmenten auf, wobei das jeweilige Radkranzsegment zumindest einen der nach radial außen weisenden Polschafte aufweist.

Der Radkranz kann dabei mit einem Hohlzylinder verglichen werden, welcher sich aus zumindest zwei in Umfangsrichtung zueinander versetzten Radkranzsegmenten zusammensetzt. Indem das jeweilige Radkranzsegment zumindest einen der Polschafte aufweist, wird eine Konstruktion mit besonderer mechanischer Belastbarkeit erreicht, da am jeweiligen Polschaft angreifende mechanische Kräfte direkt am Radkranz angreifen und schließlich an eine Nabe oder eine Welle des Schenkelpolläufers weitergegeben werden können. Insbesondere wird somit zusätzlich sichergestellt, dass im Wesentlichen keine Kräfte vom jeweiligen Polschaft an den jeweiligen Polschuh weitergegeben werden.

Zusätzlich können die Radkranzsegmente in größerer Stückzahl hergestellt werden, wodurch sich die Kosten der Herstellung reduzieren lassen. Insgesamt erlaubt die Konstruktion dabei, dass die verschiedenen Fertigungsschritte, wie die Herstellung der Polschuhe oder der Radkranzsegmente mit den Polschaften oder die Bewicklung der Polschafte, getrennt voneinander durchgeführt werden können.

Bei einer weiteren vorteilhaften Ausgestaltung der Erfindung weist der Schenkelpolläufer dabei einen Radstern auf, zu welchem der Radkranz koaxial angeordnet ist und mit welchem der Radkranz verbunden ist.

Der Radkranz ist insbesondere im Vergleich mit einer massiven Nabe oder Felgenkonstruktion leicht und dennoch mechanisch sehr belastbar. Der Radkranz bzw. die Radkranzsegmente sind dabei beispielsweise durch Aufschrumpfen oder durch Aufschweißen des Radkranzes mit dem Radstern verbunden, wobei auch eine mechanisch lösbare Verbindung mit dem Radstern zum Einsatz kommen kann. Insbesondere für die Ausführungsform des Schenkelpolläufers, bei welcher der jeweilige Polschuh das Sackloch und der jeweilige Polschaft die radial durch ihn hindurchführende Bohrungen aufweist, können radiale Durchbrüche im Radstern vorgesehen sein. Dies erlaubt, dass der jeweilige Bolzen durch den jeweiligen Polschaft und den Radstern hindurch geführt wird. Somit wird eine mechanisch lösbare Verbindung des jeweiligen Polschuhs mit dem jeweiligen Polschaft bzw. dem jeweiligen Radkranzsegment und schließlich mit dem Radstern geschaffen. Beispielsweise kann der jeweilige Bolzen an seinem radial inneren Ende wiederum ein Außengewinde aufweisen, so dass der Bolzen beispielsweise mittels einer Mutter verspannt wird. Alternativ kann anstelle einer Mutter wiederum eine in axialer Richtung verlaufende Stange vorgesehen sein, welche je Bolzen wiederum ein Innengewinde aufweist. Denkbar ist auch, dass der Bolzen lediglich zur mechanisch lösbaren Verbindung des jeweiligen Polschuhs mit dem Radkranz dient und der Radkranz über separate Bolzen bzw. Befestigungsmittel mit dem Radstern verbunden ist.

Bei einer weiteren vorteilhaften Ausgestaltung der Erfindung weist der Radstern dabei zumindest zwei Radsternsegmente auf, welche miteinander verschweißt sind.

Indem der Radstern aus zumindest zwei Radsternsegmenten zusammengesetzt wird, lassen sich auch größere Radsterndurchmesser realisieren. Insbesondere für große Durchmesser lassen sich dabei die Produktionskosten reduzieren, da die einzelnen Radsternsegmente einfach und in großer Stückzahl hergestellt werden können. Insbesondere erlaubt dies die Herstellung der Radsternsegmente an einem anderen Standort als jenem Standort, an welchem die Radsterne und gegebenenfalls weitere Teile des Schenkelpolläufers hergestellt werden.

Bei einer weiteren vorteilhaften Ausgestaltung der Erfindung weist der Schenkelpolläufer eine Welle und von der Welle nach radial außen weisende Wellenstege auf, wobei der Radkranz koaxial zur Welle angeordnet ist und mit den Wellenstegen verbunden ist.

Bei einer weiteren vorteilhaften Ausgestaltung der Erfindung weist das jeweilige Radkranzsegment dabei gestapelte, sich berührende Platten auf, wobei die Bleche des jeweiligen Polschuhs dünner sind als die Platten des jeweiligen Radkranzsegmentes.

Eine derartige Ausführung des jeweiligen Radkranzsegmentes ermöglicht, die Produktionskosten zu senken, da für das jeweilige Radkranzsegment vergleichsweise günstige Materialien zum Einsatz kommen können. Somit werden lediglich jene Bereiche des Schenkelpolläufers, welche während des Betriebs eine besonders hohe Magnetfelddichte aufweisen, mit teureren Materialien ausgeführt, welche besonders vorteilhafte magnetische Eigenschaften haben. Derartige Bereiche sind insbesondere die jeweiligen Polschuhe, welche gestapelt und insbesondere mit der elektrisch isolierenden Schicht zwischen den Blechen ausgeführt sind. Dagegen werden die Platten des jeweiligen Radkranzsegments vergleichsweise dick ausgeführt, wobei sich die Platten berühren und somit nicht gegeneinander elektrisch isoliert ausgeführt sind. Aufgrund ihrer mechanischen Robustheit können derartige Platten dabei besonders leicht zu dem jeweiligen Radkranzsegmenten zusammengesetzt werden.

Insbesondere kann das jeweilige Radkranzsegment dabei zumindest eine axiale Durchgangsbohrung aufweisen, in welcher jeweils ein Spannbolzen zum Verspannen der gestapelten Platten angeordnet ist. Durch das Verspannen der Platten wird eine besonders stabile Konstruktion des Schenkelpolläufers erreicht.

Bei einer weiteren vorteilhaften Ausgestaltung der Erfindung weist der jeweilige Polschuh dabei ein nach radial innen geöffnetes Sackloch auf, in welchem ein Innengewinde angeordnet ist, wobei der jeweilige Polschaft eine in radialer Richtung durch das jeweilige Radkranzsegment hindurchführende Bohrung aufweist, wobei jeweils ein Bolzen mit einem Außengewinde vorgesehen ist, der durch die jeweilige Bohrung hindurchgeführt und in das Innengewinde des jeweiligen Sacklochs eingeschraubt ist.

Mittels des jeweiligen Bolzens kann der jeweilige Polschuh mit dem jeweiligen Polschaft mechanisch lösbar befestigt werden, wobei der jeweilige Bolzen lediglich Kräfte des jeweiligen Polschuhs und der jeweiligen Wicklung an den jeweiligen Polschaft weitergibt. Dadurch wird der jeweilige Bolzen vergleichsweise wenig beansprucht. Insbesondere wird somit vermieden, dass der jeweilige Bolzen zusätzlich Kräfte, wie zum Beispiel während des Betriebs auftretenden Fliehkräfte, des jeweiligen Polschafts aufnehmen muss. Somit wird eine mechanisch lösbare Verbindung des Polschuhs mit dem Polschaft gewährleistet, welche gleichzeitig eine beträchtliche mechanische Belastbarkeit aufweist.

Zur mechanisch lösbaren Verbindung weist der jeweilige Bolzen ein Außengewinde auf, welches in das Innengewinde des jeweiligen Polschuhs eingeschraubt werden kann. Hierzu kann der jeweilige Polschuh beispielsweise eine in einem jeweiligen Hohlraum des Polschuhs befindliche Mutter aufweisen. Alternativ kann in dem jeweiligen Polschuh eine geschlossene, axial verlaufende Nut vorgesehen sein, in welcher eine Stange angeordnet ist. Zur Befestigung eines jeweiligen Bolzens mit dem Polschuh weist die Stange je Bolzen ein passend angeordnetes Innengewinde in einer Bohrung oder Öffnung der Stange auf. Insbesondere wenn in axialer Richtung entlang der Stange mehrere Bolzen mechanisch lösbar mit der Stange verbunden werden und somit Kräfte des jeweiligen Polschuhs und der jeweiligen Wicklung über die Bolzen an den jeweiligen Polschaft übertragbar sind, kann eine besonders belastbare mechanisch lösbare Verbindung erreicht werden. Die Stange weist beispielsweise einen runden, rechteckigen oder quadratischen Querschnitt auf.

Durch diese Konstruktion wird in besonderem Maße sichergestellt, dass über den jeweiligen Bolzen lediglich am jeweiligen Polschuh und an der jeweiligen Wicklung angreifende Kräfte übertragen werden, wodurch der Schenkelpolläufer mechanisch sehr belastbar ist.

Bei einer alternativen, vorteilhaften Ausgestaltung der Erfindung weist der jeweilige Polschuh eine in radialer Richtung hindurchführende Bohrung auf, wobei der jeweilige Polschaft ein nach radial außen geöffnetes Sackloch aufweist, in welchem ein Innengewinde angeordnet ist, wobei jeweils ein Bolzen mit einem Außengewinde vorgesehen ist, der durch die jeweilige Bohrung hindurchgeführt und in das Innengewinde des jeweiligen Sacklochs eingeschraubt ist.

Durch den jeweiligen Bolzen kann somit der jeweilige Polschuh mit dem jeweiligen Polschaft mechanisch lösbar befestigt werden. Dabei gibt der jeweilige Bolzen lediglich Kräfte des jeweiligen Polschuhs und der jeweiligen Wicklung an den jeweiligen Polschaft weiter, so dass der jeweilige Bolzen vergleichsweise wenig beansprucht wird, insbesondere gegenüber Konstruktionen, bei denen die Kräfte des Polschuhs, der Wicklung und zusätzlich des Polschafts übertragen werden müssen. Somit wird eine mechanisch lösbare Verbindung des Polschuhs mit dem Polschaft gewährleistet, welche gleichzeitig eine beträchtliche mechanische Belastbarkeit aufweist.

Zur mechanisch lösbaren Verbindung weist der jeweilige Bolzen ein Außengewinde auf, welches in das Innengewinde des jeweiligen Polschafts eingeschraubt werden kann. Hierzu kann der jeweilige Polschaft beispielsweise eine in einem jeweiligen Hohlraum des Polschafts befindliche Mutter aufweisen. Alternativ kann in dem jeweiligen Polschaft eine geschlossene, axial verlaufende Nut vorgesehen sein, in welcher eine Stange angeordnet ist. Zur Befestigung eines jeweiligen Bolzens mit dem Polschaft weist die Stange je Bolzen ein passend angeordnetes Innengewinde in einer Bohrung oder Öffnung der Stange auf. Insbesondere wenn in axialer Richtung entlang der Stange mehrere Bolzen mechanisch lösbar mit der Stange verbunden werden und somit Kräfte des jeweiligen Polschuhs und der jeweiligen Wicklung über die Bolzen an den jeweiligen Polschaft übertragbar sind, kann eine besonders belastbare, mechanisch lösbare Verbindung erreicht werden. Die jeweilige Stange verleiht der geblechten Konstruktion des jeweiligen Polschuhs damit eine besondere Stabilität und Steifheit über die gesamte axiale Länge, wobei die Stange beispielsweise einen runden, rechteckigen oder quadratischen Querschnitt aufweisen kann. Insbesondere kann die jeweilige Stange an ihren beiden axialen Enden die jeweilige Wicklung überdecken, so dass die jeweilige Wicklung radial weiter innen als das jeweilige axiale Ende der Stange angeordnet ist. Damit kann die Wicklung besonders gut in radialer Richtung fixiert werden.

Bei einer weiteren vorteilhaften Ausgestaltung der Erfindung weist der jeweilige Polschuh und/oder der jeweilige Polschaft zumindest einen in axialer Richtung verlaufenden Kühlkanal auf.

Durch den jeweiligen Kühlkanal kann ein Kühlmedium, beispielsweise Luft, Öl oder Wasser hindurch geführt werden. Dies erlaubt, den Schenkelpolläufer an jenen Orten gezielt zu kühlen, an denen während des Betriebs die meiste Verlustwärme entsteht und abgeführt werden muss. Beispielsweise kann der jeweilige Kühlkanal als geschlossene Nut bzw. Bohrung ausgeführt sein, welche im jeweiligen Polschuh bzw. im jeweiligen Polschaft angeordnet ist.

Bei einer weiteren vorteilhaften Ausgestaltung der Erfindung weist der jeweilige Polschuh und/oder der jeweilige Polschaft dabei an einer Oberfläche zur elektrischen Wicklung eine offene Nut auf, in welcher der zumindest eine, in axialer Richtung verlaufende Kühlkanal angeordnet ist.

Da die jeweilige elektrische Wicklung während des Betriebs besonders heiß werden kann, ermöglicht die Anordnung des jeweiligen Kühlkanals in der unmittelbaren Nachbarschaft der jeweiligen elektrischen Wicklung eine besonders effiziente Kühlung. Beispielsweise kann ein derartiger Kühlkanal durch ein Rohr oder ein Hohlprofil gebildet werden, welches in der offenen Nut im jeweiligen Polschuh bzw. im jeweiligen Polschaft angeordnet ist und gleichzeitig die jeweilige elektrische Wicklung berührt.

Bei einer weiteren vorteilhaften Ausgestaltung der Erfindung weist der Schenkelpolläufer zumindest einen in radialer Richtung verlaufenden Kühlkanal auf, wobei der zumindest eine in radialer Richtung verlaufende Kühlkanal in einer jeweiligen Nut durch jeweiligen Polschaft und/oder durch den jeweiligen Polschuh verläuft und/oder wobei der zumindest eine in radialer Richtung verlaufende Kühlkanal zumindest teilweise zwischen dem jeweiligen Polschaft und der Wicklung verläuft.

Durch den jeweiligen, in radialer Richtung verlaufenden Kühlkanal kann die Kühlung des Schenkelpolläufers verbessert werden. Hierzu ist eine jeweilige Nut im jeweiligen Polschaft und/oder im jeweiligen Polschuh vorgesehen, wobei die jeweilige Nut beispielsweise geschlossen ausgeführt ist und in radialer Richtung aus dem jeweiligen Polschaft kommend in den jeweiligen Polschuh fortgesetzt wird. Alternativ oder zusätzlich kann der jeweilige, in radialer Richtung verlaufende Kühlkanal zumindest teilweise zwischen dem jeweiligen Polschaft und der Wicklung angeordnet sein. Dieser Kühlkanal kann insbesondere anhand einer in radialer Richtung verlaufenden Nut durch den jeweiligen Polschaft hindurch mit Kühlluft versorgt werden.

Bei einer weiteren vorteilhaften Ausgestaltung der Erfindung ist die elektrische Maschine mit einer Leistung von zumindest 1 MW, insbesondere mehr als 10 MW, betreibbar und/oder weist der Schenkelpolläufer einen Durchmesser von zumindest 1 m, insbesondere mehr als 5 m, auf.

Insbesondere umfasst die Erfindung auch eine Anordnung für einen Schenkelpolläufer, wobei die Anordnung zumindest ein jeweiliges Radkranzsegment mit zumindest einem nach radial außen weisenden Polschaft und einen zugehörigen Polschuh umfasst.

Die zuvor erläuterten verschiedenen Ausgestaltungen des Schenkelpolläufers sind besonders wirkungsvoll bei größeren und leistungsstärkeren elektrischen Maschinen, welche eine elektrische Leistung im Megawattbereich aufweisen und deren Schenkelpolläufer vorzugsweise einen Durchmesser von zumindest 1 m oder mehr als 5 m aufweist.

Im Folgenden wird die Erfindung anhand der in den Figuren dargestellten Ausführungsbeispiele näher beschrieben und erläutert. Es zeigen:
- FIG 1: einen Querschnitt eines Radkranzsegmentes eines ersten Ausführungsbeispiels des erfindungsgemäßen Schenkelpolläufers,
- FIG 2: einen Querschnitt eines Radkranzsegmentes eines zweiten Ausführungsbeispiels des erfindungsgemäßen Schenkelpolläufers,
- FIG 3: einen Querschnitt eines dritten Ausführungsbeispiels des erfindungsgemäßen Schenkelpolläufers,
- FIG 4: einen Längsschnitt eines vierten Ausführungsbeispiels des erfindungsgemäßen Schenkelpolläufers,
- FIG 5: einen Ausschnitt eines fünften Ausführungsbeispiels,
- FIG 6: einen Längsschnitt eines sechsten Ausführungsbeispiels, und
- FIG 7: einen Querschnitt eines Radkranzsegmentes eines siebten Ausführungsbeispiels.

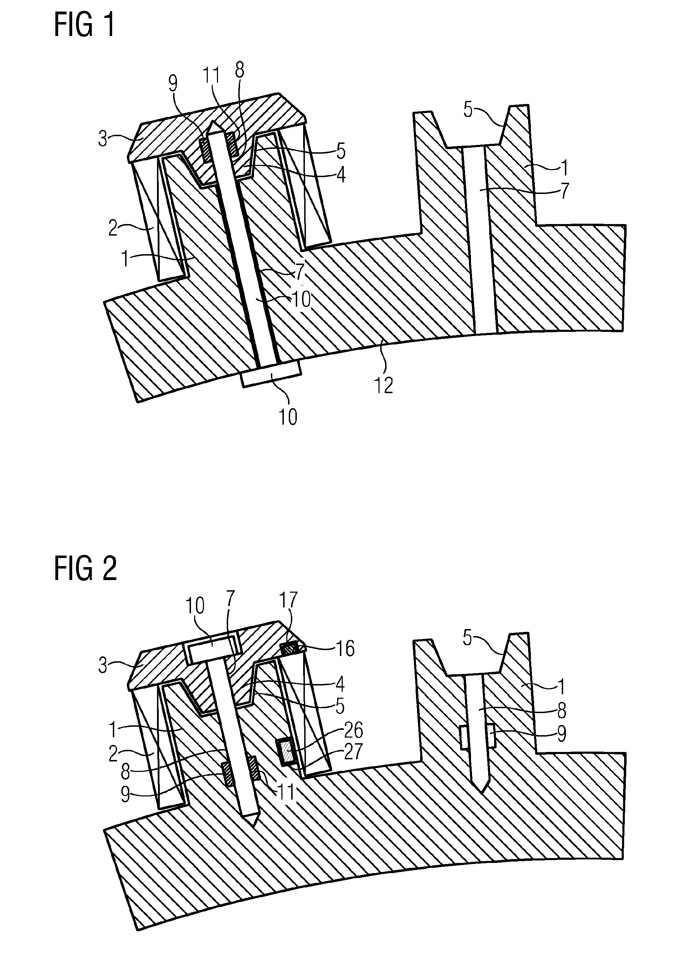

Figur 1 zeigt einen Querschnitt eines Radkranzsegmentes 12 eines ersten Ausführungsbeispiels des erfindungsgemäßen Schenkelpolläufers.

Das Radkranzsegment 12 weist zwei nach radial außen weisende Polschafte 1 auf, welche jeweils eine in radialer Richtung durch das jeweilige Radkranzsegment 12 hindurchführende Bohrung 7 aufweisen. Weiterhin weist der jeweilige Polschaft 1 an seiner radialen Außenfläche eine sich nach radial innen verjüngenden Nut 5 auf. Für eine verbesserte Übersichtlichkeit sind die im Folgenden beschriebenen Details lediglich für den in der Figur 1 links dargestellten Polschaft 1 zeichnerisch dargestellt.

Der jeweilige Polschaft 1 wird von einer elektrischen Wicklung 2 umschlossen, welche zur Montage zunächst gewickelt und gegebenenfalls zur Isolierung getränkt und erst anschließend auf den jeweiligen Polschaft 1 aufgebracht werden kann. Radial außen an den jeweiligen Polschaft 1 und die jeweilige Wicklung 2 schließt sich ein Polschuh 3 an, welcher an seiner radialen Innenseite über einen sich nach radial innen verjüngenden Steg 4 verfügt. Dabei ist der Steg 4 derart ausgeführt, dass er gut in die jeweilige Nut 5 passt und bei einem montierten Polschuh 3 eine gute Fixierung und Positionierung des jeweiligen Polschuhs 3 gewährleistet. Der jeweilige Polschuh 3 ist dabei in Umfangsrichtung breiter als der jeweilige Polschaft 1 und weist ein nach radial innen geöffnetes Sackloch 8 mit einem Innengewinde 9 auf.

Zur mechanisch lösbaren Verbindung des jeweiligen Polschuhs 3 mit dem jeweiligen Polschaft 1 bzw. dem jeweiligen Radkranzsegment 12 ist ein Bolzen 10 mit einem Außengewinde 11 vorgesehen, der durch die jeweilige Bohrung 7 hindurch geführt und in das Innengewinde 9 des jeweiligen Sacklochs 8 eingeschraubt ist. Der Bolzen 10 kann dabei, wie in der Figur 1 dargestellt, einen Kopf aufweisen, mittels welchem radiale Kräfte an das jeweilige Radkranzsegment 12 übertragen werden können. Alternativ kann anstelle eines Kopfes z. B. eine Mutter verwendet werden, welche auf ein weiteres Außengewinde des Bolzen 10 auf geschraubt wird, um radiale Kräfte an das jeweilige Radkranzsegment 12 übertragen.

Figur 2 zeigt einen Querschnitt eines Radkranzsegmentes eines zweiten Ausführungsbeispiels des erfindungsgemäßen Schenkelpolläufers.

Das Radkranzsegment 12 weist zwei nach radial außen weisende Polschafte 1 auf, welche jeweils ein nach radial außen geöffnetes Sackloch 8 mit einem Innengewinde 9 aufweisen. Weiterhin weist der jeweilige Polschaft 1 an seiner radialen Außenfläche eine sich nach radial innen verjüngenden Nut 5 auf. Für eine verbesserte Übersichtlichkeit sind die im Folgenden beschriebenen Details lediglich für den in der Figur 2 links dargestellten Polschaft 1 zeichnerisch dargestellt.

Der jeweilige Polschaft 1 wird von einer elektrischen Wicklung 2 umschlossen, welche zur Montage zunächst gewickelt und gegebenenfalls zur Isolierung getränkt und erst anschließend auf den jeweiligen Polschaft 1 aufgebracht werden kann. Radial außen an den jeweiligen Polschaft 1 und die jeweilige Wicklung 2 schließt sich ein Polschuh 3 an, welcher an seiner radialen Innenseite über einen sich nach radial innen verjüngenden Steg 4 verfügt. Dabei ist der Steg 4 derart ausgeführt, dass er gut in die jeweilige Nut 5 passt und bei einem montierten Polschuh 3 eine gute Fixierung und Positionierung des jeweiligen Polschuhs 3 gewährleistet. Der jeweilige Polschuh 3 ist dabei in Umfangsrichtung breiter als der jeweilige Polschaft 1 und weist eine in radialer Richtung durch den jeweiligen Polschuh 3 hindurchführende Bohrung 7 auf.

Zur mechanisch lösbaren Verbindung des jeweiligen Polschuhs 3 mit dem jeweiligen Polschaft 1 bzw. dem jeweiligen Radkranzsegment 12 ist ein Bolzen 10 mit einem Außengewinde 11 vorgesehen, der durch die jeweilige Bohrung 7 hindurch geführt und in das Innengewinde 9 des jeweiligen Sacklochs 8 eingeschraubt ist. Der Bolzen 10 kann dabei, wie in der Figur 2 dargestellt, einen Kopf aufweisen, welcher radiale Kräfte des jeweiligen Polschuhs 3 aufnehmen kann. Alternativ kann anstelle eines Kopfes z. B. eine Mutter verwendet werden, welche auf ein weiteres Außengewinde des Bolzen 10 auf geschraubt wird, um radiale Kräfte des jeweiligen Polschuhs 3 aufzunehmen.

Um eine verbesserte Kühlung zu erreichen, weist der jeweilige Polschuh 3 eine offene Nut 17 auf, welche an einer Oberfläche des jeweiligen Polschuhs 3 zur elektrischen Wicklung 2 angeordnet ist und in welcher sich ein in axialer Richtung verlaufender Kühlkanal 16 befindet. Weiterhin wird die Kühlung durch eine offene Nut 27 verbessert, welche an einer Oberfläche des jeweiligen Polschafts 1 zur elektrischen Wicklung 2 angeordnet ist und in welcher sich ein in axialer Richtung verlaufender Kühlkanal 26 befindet. Prinzipiell kann dabei auf eine oder beide der Nuten auch verzichtet werden, wobei auch der Schenkelpolläufer gemäß dem ersten Ausführungsbeispiel mit derartigen Nuten und Kühlkanälen versehen werden kann.

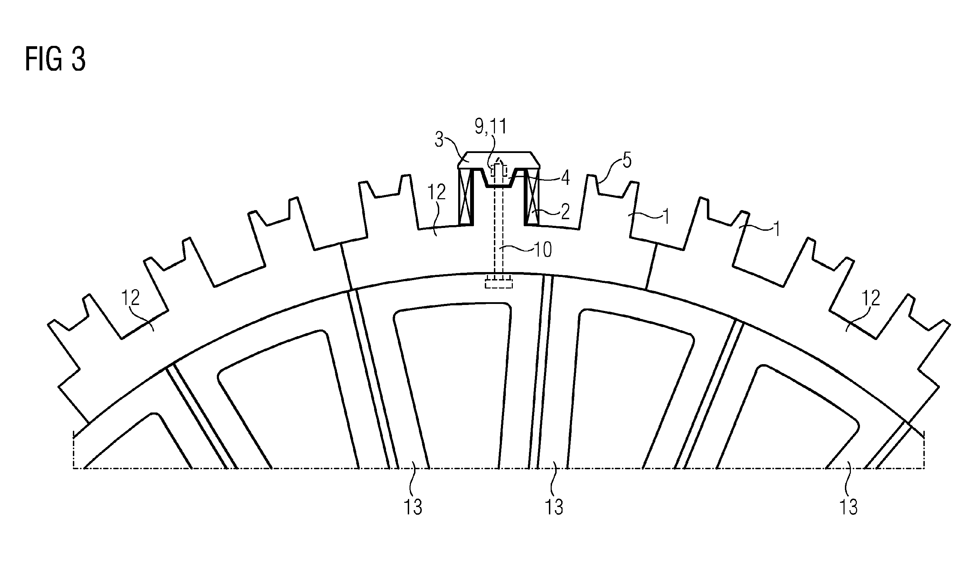

Figur 3 zeigt einen Querschnitt eines dritten Ausführungsbeispiels des erfindungsgemäßen Schenkelpolläufers. Dabei weist das dritte Ausführungsbeispiel eine Ähnlichkeit mit dem ersten Ausführungsbeispiel auf, wobei gleiche Bezugszeichen wie in Figur 1 gleiche Gegenstände bezeichnen.

Die Radkranzsegmente 12 weisen im Gegensatz zum ersten Ausführungsbeispiel nunmehr jeweils drei Polschafte 1 auf. Die Radkranzsegmente 12 bilden einen Radkranz, welcher koaxial zu einem Radstern angeordnet sind, wobei der Radstand mehrere Radsternsegmente 13 aufweist, welche miteinander verschweißt sind. Der Radkranz kann mit dem Radstern beispielsweise durch Aufschrumpfen oder Aufschweißen verbunden werden. Denkbar ist auch eine mechanisch lösbare Verbindung, beispielsweise mit dem jeweiligen Bolzen 10 oder weiteren Bolzen bzw. Verbindungsmitteln.

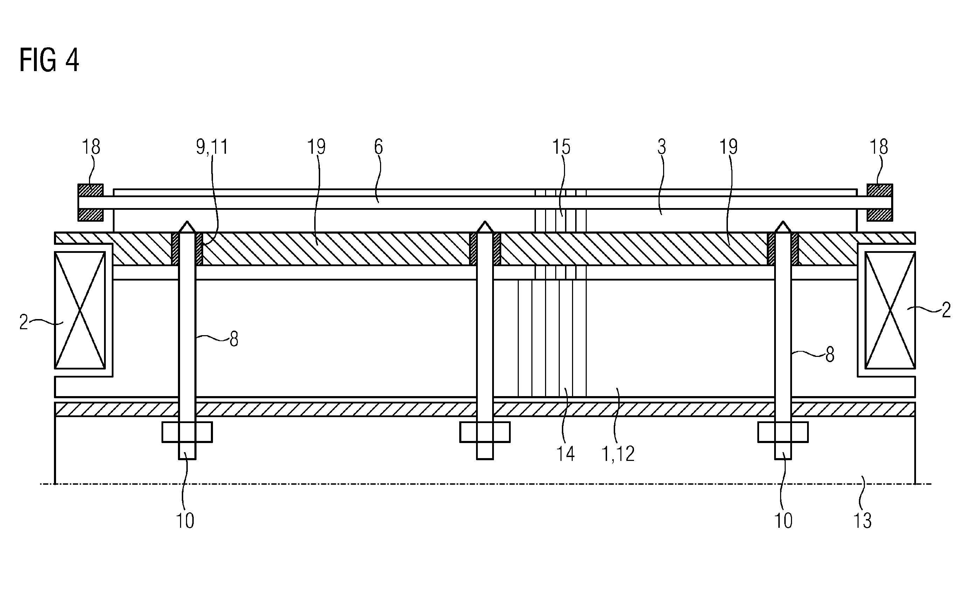

Figur 4 zeigt einen Längsschnitt eines vierten Ausführungsbeispiels des erfindungsgemäßen Schenkelpolläufers. Das vierte Ausführungsbeispiel weist hierbei eine Ähnlichkeit mit dem ersten und dritten Ausführungsbeispiel auf, wobei wiederum gleiche Bezugszeichen wie in den Figuren 1 und 3 gleiche Gegenstände bezeichnen.

Der Schenkelpolläufer gemäß dem vierten Ausführungsbeispiel verfügt über Kurzschlussstäbe 6, welche in den jeweiligen Polschuhen 3 angeordnet sind und welche jeweils an deren axialen Enden mittels eines jeweiligen Kurzschlussringes 18 miteinander verbunden sind. Die jeweiligen Polschuhe 3 sind geblecht ausgeführt.

Weiterhin sind mehrere Bolzen 7 vorgesehen, welche durch jeweilige Bohrungen 7 durch das jeweilige Radkranzsegment 12 hindurchgeführt werden und in ein jeweiliges, im jeweiligen Polschuh 3 angeordnetes Innengewinde 9 eingreifen. Dabei ist eine Stange 19 vorgesehen, welche im jeweiligen Polschuh 3 angeordnet ist und welche an der axialen Position des jeweiligen Bolzens 7 eine jeweilige Öffnung mit einem jeweiligen Innengewinde 9 aufweist. Im Rahmen des Ausführungsbeispiels überdeckt die Stange 19 an ihren beiden axialen Enden die jeweilige Wicklung 2, so dass die jeweilige Wicklung 2 radial weiter innen als das jeweilige axiale Ende der Stange 19 angeordnet ist. Damit kann die Wicklung 2 besonders gut in radialer Richtung fixiert werden.

Der jeweilige geblechte Polschuh 3 weist in axialer Richtung gestapelte Bleche 15 auf und das jeweilige Radkranzsegment 12 verfügt über axial gestapelte und sich berührende Platten 14. Dabei sind die Bleche 15 von einander durch eine isolierende Schicht elektrisch getrennt, wobei die Bleche 15 dünner ausgeführt sind als die Platten 14.

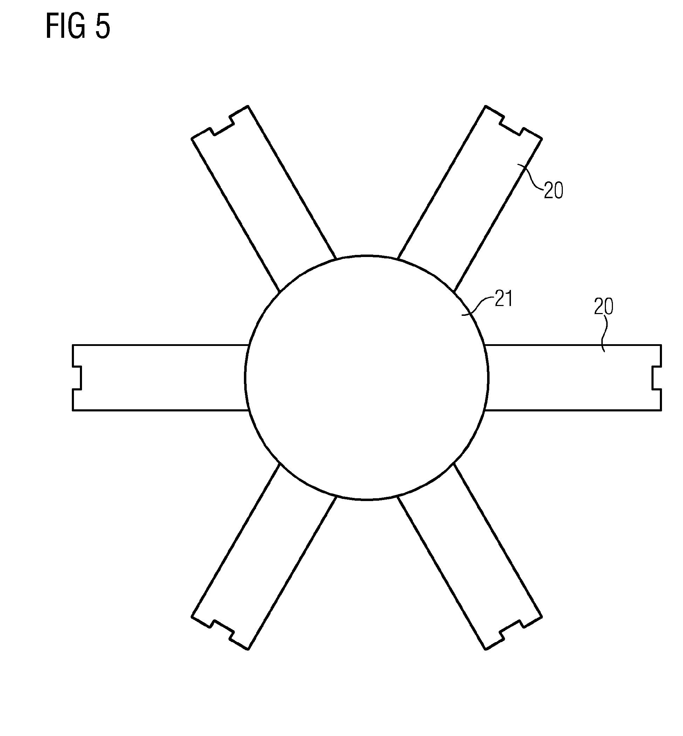

Figur 5 zeigt einen Ausschnitt eines fünften Ausführungsbeispiels. Dargestellt sind dabei lediglich eine Welle 21 und radial von der Welle 21 nach außen weisende Wellenstege 20. Der restliche Schenkelpolläufer kann beispielsweise wie in einem der übrigen Ausführungsbeispiele mit Ausnahme des dritten Ausführungsbeispiels ausgeführt sein.

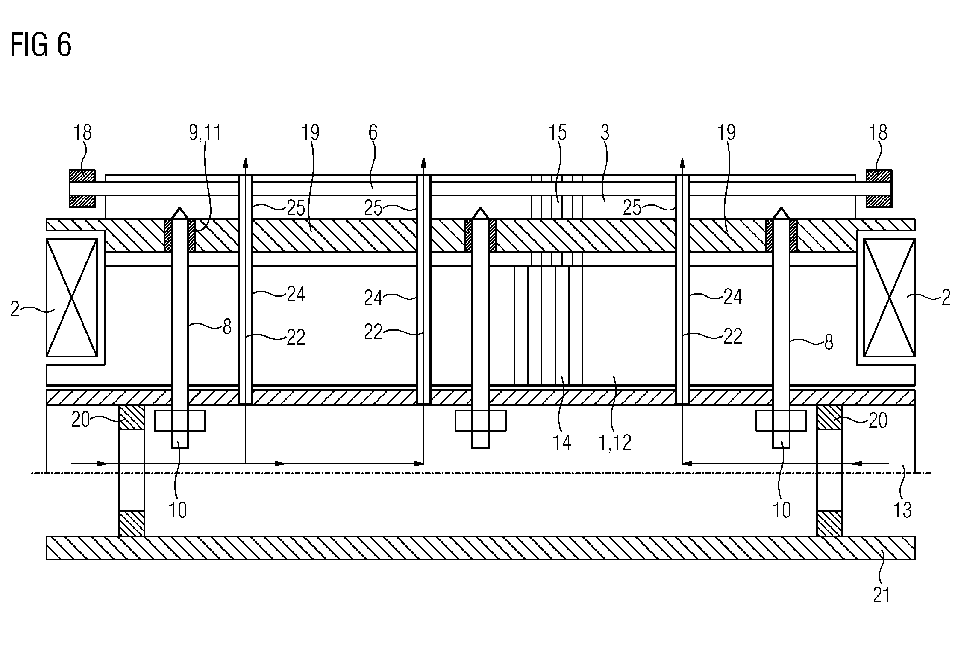

Figur 6 zeigt einen Längsschnitt eines sechsten Ausführungsbeispiels, welches dem vierten Ausführungsbeispiel recht ähnlich ist, so dass Im Folgenden lediglich die Unterschiede erläutert werden. Der Schenkelpolläufer weist eine Welle 21 und sich nach radial außen an die Welle 21 anschließende Wellenstege 20 auf, welche schließlich mit dem Radkranz verbunden sind. Der Schenkelpolläufer weist dabei mehrere radial nach außen führende Kühlkanäle 22 auf, welche jeweils durch eine jeweilige Nut 24 im Polschaft 1 und durch eine jeweilige Nut 25 im Polschuh 3 gebildet werden. Dabei kann dem jeweiligen Kühlkanal 22 Kühlluft zunächst in axialer Richtung zugeführt werden, beispielsweise entlang der Welle 21 und zwischen in Umfangsrichtung benachbarte Wellenstege 20. Für die radial nach außen führenden Kühlkanäle 22 kann jedoch auch einen Schenkelpolläufer mit einem Radstern gemäß dem dritten Ausführungsbeispiel verwendet werden.

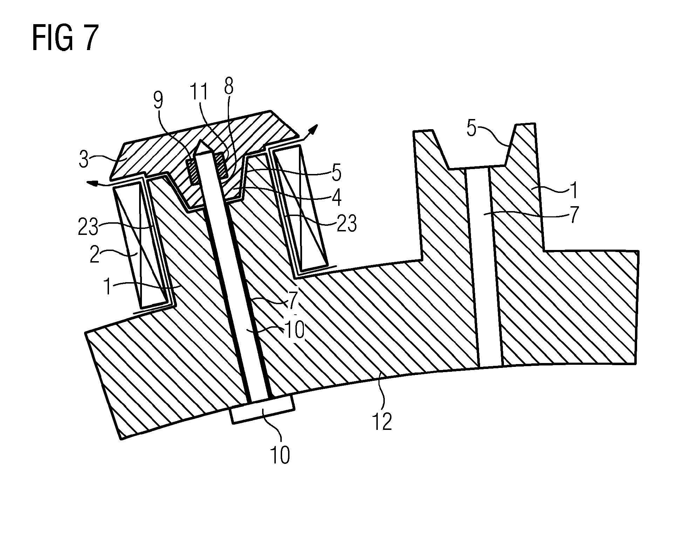

Figur 7 zeigt einen Querschnitt eines Radkranzsegmentes eines siebten Ausführungsbeispiels. Zwischen der Wicklung 2 und dem Polschaft 1 ist ein Kühlkanal 23 angeordnet, durch welchen Kühlluft in im Wesentlichen radialer Richtung hindurch strömen kann. Der Kühlkanal 23 wird dabei zwischen der Wicklung 2 und dem Polschuh 3 fortgesetzt, so dass die radial nach außen strömende Kühlluft wieder aus dem Kühlkanal 23 hinausgeführt wird.

Der Kühlkanal 23 kann dabei zusätzlich zu den schon zuvor erläuterten Kühlkanälen der anderen Ausführungsbeispiele vorgesehen werden.

Zusammenfassend betrifft die Erfindung einen Schenkelpolläufer aufweisend zumindest zwei nach radial außen weisende Polschafte, jeweils eine den jeweiligen Polschaft umgebende elektrische Wicklung und jeweils einen Polschuh, wobei der jeweilige Polschuh radial außen am jeweiligen Polschaft ist. Weiterhin betrifft die Erfindung eine elektrische Maschine mit einem derartigen Schenkelpolläufer. Um einen Schenkelpolläufer bereitzustellen, der leichter herzustellen und zu warten ist, wird vorgeschlagen, dass der jeweilige Polschuh in Umfangsrichtung breiter als der jeweilige Polschaft ist und radial außen an der jeweiligen Wicklung angeordnet ist, wobei der jeweilige Polschuh einen nach radial innen weisenden, sich verjüngenden Steg aufweist, wobei der jeweilige Polschaft an seiner radialen Außenfläche eine sich nach radial innen verjüngende und zum jeweiligen Steg passende Nut aufweist, wobei der jeweilige Polschuh und der jeweilige Polschaft mechanisch lösbar verbunden sind.

## Patentansprüche

1. Schenkelpolläufer aufweisend
- zumindest zwei nach radial außen weisende Polschafte (1),
- jeweils eine den jeweiligen Polschaft (1) umgebende elektrische Wicklung (2) und
- jeweils einen Polschuh (3),
wobei der jeweilige Polschuh (3) radial außen am jeweiligen Polschaft (1) angeordnet ist,
**dadurch gekennzeichnet, dass**
der jeweilige Polschuh (3) in Umfangsrichtung breiter als der jeweilige Polschaft (1) ist und radial außen an der jeweiligen Wicklung (2) angeordnet ist,
wobei der jeweilige Polschuh (3) einen nach radial innen weisenden, sich verjüngenden Steg (4) aufweist,
wobei der jeweilige Polschaft (1) an seiner radialen Außenfläche eine sich nach radial innen verjüngende und zum jeweiligen Steg (4) passende Nut (5) aufweist,
wobei der jeweilige Polschuh (3) und der jeweilige Polschaft (1) mechanisch lösbar verbunden sind.

2. Schenkelpolläufer nach Anspruch 1,
wobei im jeweiligen Polschuh (3) zumindest ein Kurzschlussstab (6) angeordnet ist.

3. Schenkelpolläufer nach einem der vorhergehenden Ansprüche,
wobei der jeweilige Polschuh (3) geblecht ausgeführt ist,
wobei jeweils eine elektrisch isolierende Schicht zwischen den Blechen (15) des jeweiligen Polschuhs (3) angeordnet ist.

4. Schenkelpolläufer nach einem der vorhergehenden Ansprüche,
wobei der Schenkelpolläufer einen Radkranz mit zumindest zwei Radkranzsegmenten (12) aufweist,
wobei das jeweilige Radkranzsegment (12) zumindest einen der nach radial außen weisenden Polschafte (1) aufweist.

5. Schenkelpolläufer nach Anspruch 4,
wobei der Schenkelpolläufer einen Radstern aufweist, zu welchem der Radkranz koaxial angeordnet ist und mit welchem der Radkranz verbunden ist.

6. Schenkelpolläufer nach Anspruch 5,
wobei der Radstern zumindest zwei Radsternsegmente (13) aufweist, welche miteinander verschweißt sind.

7. Schenkelpolläufer nach Anspruch 4,
wobei der Schenkelpolläufer eine Welle (21) und von der Welle (20) nach radial außen weisende Wellenstege (20) aufweist,
wobei der Radkranz koaxial zur Welle (21) angeordnet ist und mit den Wellenstegen (20) verbunden ist.

8. Schenkelpolläufer nach Anspruch 3 und nach einem der Ansprüche 4-7,
wobei das jeweilige Radkranzsegment (12) gestapelte, sich berührende Platten (14) aufweist,
wobei die Bleche (15) des jeweiligen Polschuhs (3) dünner sind als die Platten (14) des jeweiligen Radkranzsegmentes (12).

9. Schenkelpolläufer nach einem der Ansprüche 4-8,
wobei der jeweilige Polschuh (3) ein nach radial innen geöffnetes Sackloch (8) aufweist, in welchem ein Innengewinde (9) angeordnet ist,
wobei der jeweilige Polschaft (1) eine in radialer Richtung durch das jeweilige Radkranzsegment (12) hindurchführende Bohrung (7) aufweist,
wobei jeweils ein Bolzen (10) mit einem Außengewinde (11) vorgesehen ist, der durch die jeweilige Bohrung (7) hindurchgeführt und in das Innengewinde (9) des jeweiligen Sacklochs (8) eingeschraubt ist.

10. Schenkelpolläufer nach einem der Ansprüche 1-8,
wobei der jeweilige Polschuh (3) eine in radialer Richtung hindurchführende Bohrung (7) aufweist,
wobei der jeweilige Polschaft (1) ein nach radial außen geöffnetes Sackloch (8) aufweist, in welchem ein Innengewinde (9) angeordnet ist,
wobei jeweils ein Bolzen (10) mit einem Außengewinde (11) vorgesehen ist, der durch die jeweilige Bohrung (7) hindurchgeführt und in das Innengewinde (9) des jeweiligen Sacklochs (8) eingeschraubt ist.

11. Schenkelpolläufer nach einem der vorhergehenden Ansprüche,
wobei der jeweilige Polschuh (3) und/oder der jeweilige Polschaft (1) zumindest einen in axialer Richtung verlaufenden Kühlkanal (16, 26) aufweist.

12. Schenkelpolläufer nach Anspruch 11,
wobei der jeweilige Polschuh (3) und/oder der jeweilige Polschaft (1) an einer Oberfläche zur elektrischen Wicklung (2) eine offene Nut (17, 27) aufweist, in welcher der zumindest eine in axialer Richtung verlaufende Kühlkanal (16, 27) angeordnet ist.

13. Schenkelpolläufer nach einem der vorhergehenden Ansprüche,
wobei der Schenkelpolläufer zumindest einen in radialer Richtung verlaufenden Kühlkanal (22, 23) aufweist,
wobei der zumindest eine in radialer Richtung verlaufende Kühlkanal (22) in einer jeweiligen Nut (24, 25) durch den jeweiligen Polschaft (1) und/oder durch den jeweiligen Polschuh (3) verläuft und/oder
wobei der zumindest eine in radialer Richtung verlaufende Kühlkanal (23) zumindest teilweise zwischen dem jeweiligen Polschaft (1) und der Wicklung (2) verläuft.

14. Elektrische Maschine mit einem Schenkelpolläufer nach einem der vorhergehenden Ansprüche.

15. Elektrische Maschine nach Anspruch 14,
wobei die elektrische Maschine mit einer Leistung von zumindest 1 MW, insbesondere mehr als 10 MW, betreibbar ist und/oder der Schenkelpolläufer einen Durchmesser von zumindest 1 m, insbesondere mehr als 5 m, aufweist.
